# FASCICULE DE BREVET EUROPEEN

(11) **EP 2 035 717 B1**
(45) Date de publication et mention de la délivrance du brevet: **05.08.2009**
(21) Numéro de dépôt: 07788971.5
(22) Date de dépôt: 08.06.2007
(51) Int. Cl.: F16C 7/04

(54) **BIELLETTE DE LIAISON ENTRE DEUX ORGANES MOBILES, ET VEHICULE AUTOMOBILE CORRESPONDANT**
KOPPELSTANGE ZUR VERBINDUNG VON ZWEI BEWEGLICHEN TEILEN UND ENTSPRECHENDES KRAFTFAHRZEUG
LINK ROD PROVIDING THE CONNECTION BETWEEN TWO MOVING PARTS AND CORRESPONDING MOTOR VEHICLE

(30) Priorité: 30.06.2006 FR 0605937
(43) Date de publication de la demande: 18.03.2009
(73) Titulaire: Peugeot Citroën Automobiles Société Anonyme, 78140 Velizy Villacoublay (FR)
(72) Inventeur: EKUE, Fabrice, F-75020 Paris (FR); HENRIOT, Philippe, F-75017 Paris (FR); BERNAUDIN, Matthieu, F-75015 Paris (FR)
(86) Numéro de dépôt international: PCT/FR2007/051402
(87) Numéro de publication internationale: WO 2008/000985

(56) Documents cités:
- EP-A1- 0 320 088
- FR-A1- 2 853 369
- US-A1- 1 646 948
- US-A1- 1 728 203
- US-A1- 3 705 701
- US-A1- 2005 121 250

## Description

La présente invention concerne une biellette de liaison entre deux organes mobiles l'un par rapport à l'autre, ainsi qu'un véhicule automobile pourvu d'au moins une telle biellette de liaison.

La biellette conforme à l'invention est destinée à être interposée, à des fins de limitation de débattement relatif et de filtrage de vibrations, entre !es deux éléments mobiles précités. Elle est tout particulièrement, mais non exclusivement, destinée à être interposée entre le groupe motopropulseur, ou GMP, d'un véhicule automobile et la caisse de celui-ci. Les organes mobiles, auxquels il est fait allusion ci-dessus, sont alors ce GMP et cette caisse.

On connaît, par FR-A-2 853 369, une telle biellette de liaison qui possède un corps allongé, dans lequel sont définis deux logements de réception d'arbres correspondants, dont l'un est solidarisé au GMP du véhicule et dont l'autre est solidarisé à la structure de ce dernier. De façon plus précise, il est prévu une armature extérieure tubulaire, qui est pourvue du premier logement, ainsi qu'une seconde armature logée à l'intérieur de l'armature extérieure précitée, qui est pourvue du second logement. En outre, des masses de matériaux élastiques sont fixées par adhérence sur la face interne de la première armature, ainsi que sur la seconde armature.

Ceci étant précisé, l'invention vise à proposer une biellette de liaison qui assure une sécurité accrue au véhicule automobile qui en est équipé, en particulier dans le cas de chocs auxquels serait soumis ce véhicule.

On connaît par le document US2005121250 (MIYAHARA TETSUYA [JP]) une telle biellette de liaison interposée entre le GMP et la caisse du véhicule. cette biellette est pourvue d'une portion mécaniquement affaiblie de sorte qu'en cas d'impact lors d'un choc, cette portion se fracture pour absorber l'énergie, cassant de fait la biellette en deux parties distinctes.
Cette cassure de la biellette de liaison en deux parties distinctes, sans guidage ni limitation du mouvement de ces deux parties, a pour inconvénient de permettre le déplacement du GMP vers l'habitacle en cas de choc, diminuant de fait le niveau de sécurité du véhicule.

L'invention propose d'augmenter le niveau de sécurité dans un véhicule où un élément de liaison est interposé entre deux éléments à supporter.

A cet effet, elle a pour objet une biellette de liaison entre deux organes mobiles l'un par rapport à l'autre, en particulier entre un groupe motopropulseur et une caisse d'un véhicule automobile, cette biellette comprenant un corps allongé, un premier logement de réception d'un premier arbre, destiné à être solidarisé avec l'un desdits deux organes, ainsi qu'un second logement de réception d'un second arbre, destiné à être solidarisé avec l'autre desdits deux organes mobiles, caractérisée en ce qu'elle comprend des moyens de rupture programmée, interposés entre lesdits logements, ces moyens de rupture programmés étant propres à se rompre lors de l'application d'un effort selon un axe longitudinal du corps, de manière à autoriser le rapprochement entre les deux logements.

Selon d'autres caractéristiques de l'invention :
- les moyens de rupture programmée comprennent une jupe mince, reliant deux côtés latéraux du corps ;
- l'un des deux logements est formé dans un insert, réalisé en un matériau plus résistant que les moyens de rupture programmée ;
- cette biellette comprend également des moyens de dissipation de l'énergie produite par ledit effort selon l'axe longitudinal du corps ;
- les moyens de dissipation de l'énergie comprennent au moins une nervure transversale, prévue à l'opposé des moyens de rupture programmée par rapport audit insert ;
- il est prévu des moyens de guidage du mouvement relatif des deux logements ;
- les moyens de guidage comprennent deux rails latéraux du corps, définissant un chemin se rétrécissant à l'opposé de l'insert.

L'invention a également pour objet un véhicule automobile comprenant une caisse, un groupe motopropulseur, ainsi qu'au moins une biellette de liaison, reliant cette caisse et ce groupe motopropulseur, la ou chaque biellette de liaison étant telle que définie ci-dessus.

Selon une caractéristique avantageuse, l'arbre reçu dans le logement défini dans l'insert en matériau plus résistant est solidaire de la caisse du véhicule, en particulier du berceau moteur.

L'invention va être décrite ci-après, en référence aux dessins annexés, donnés uniquement à titre d'exemple non limitatif, dans lesquels :
- les figures 1A et 1B sont des vues respectivement de dessus et en perspective, illustrant une biellette de liaison conforme à l'invention ;
- la figure 2 est une vue de dessus, analogue à la figure 1A, illustrant différentes étapes de la déformation de la biellette de liaison des figures 1A et 1B, lors d'un choc ; et
- la figure 3 est une vue de dessous, illustrant le groupe motopropulseur et la caisse d'un véhicule automobile, qui sont reliés par une biellette de liaison conforme à l'invention.

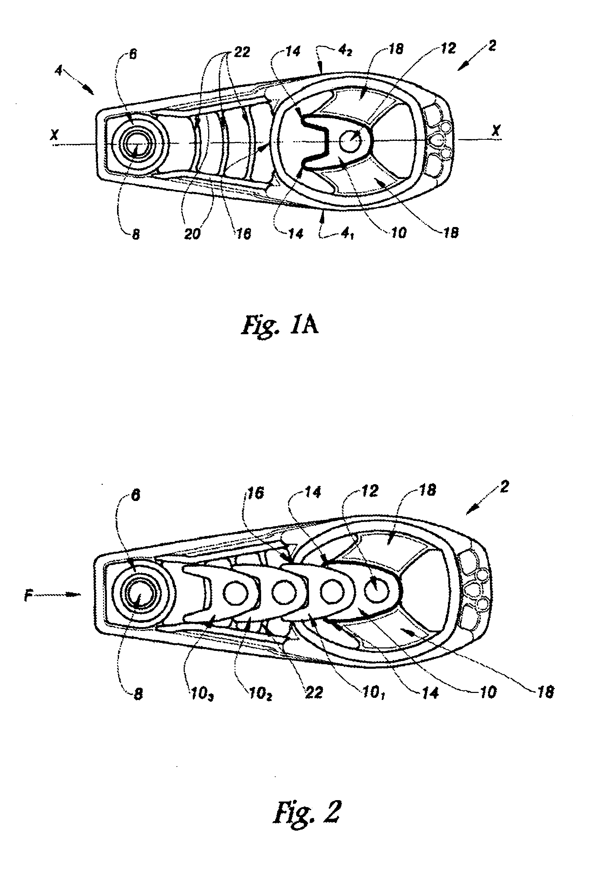

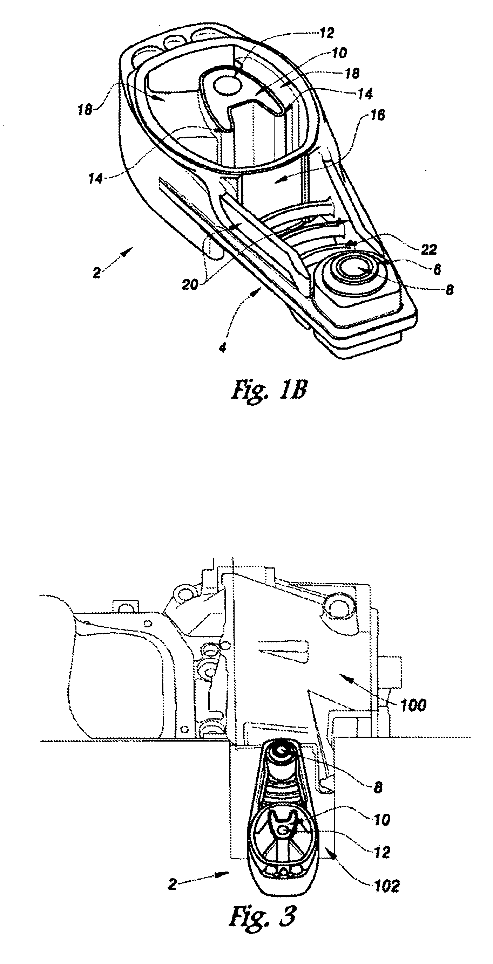

La biellette de liaison, illustrée sur les figures 1A et 1B, est désignée dans son ensemble par la référence 2. Elle comprend un corps allongé 4, réalisé en un matériau moulable, qui est par exemple un matériau plastique, permettant d'assurer la contrainte de tenue aux efforts de l'ensemble de la biellette. On note par ailleurs X-X l'axe principal du corps 4.

A une première extrémité du corps 4, en l'occurrence à gauche sur la figure 1A, il est prévu une première bague 6, réalisée en un matériau élastomère. Cette bague 6 peut être surmoulée sur le corps 4, ou bien encore sur une armature insérée dans ce corps. Elle définit un logement 8, permettant la réception d'un arbre non représenté, qui est solidaire d'un premier organe mobile, également non représenté sur les figures 1A et 1B. Cet arbre peut s'étendre de façon globalement perpendiculaire au plan de la feuille, comme dans l'exemple illustré, mais également parallèlement à celui-ci.

A l'opposé de la bague 6, il est prévu un insert 10, qui est réalisé en un matériau plus résistant que celui du corps 4. Dans cette optique, on utilisera de façon avantageuse de l'aluminium, afin de pouvoir gérer aisément la rupture programmée, qui sera expliquée plus en détail dans ce qui suit.

Cet insert 10 définit un logement central 12, de réception d'un second arbre solidaire d'un second organe mobile, tous deux non représentés. Cet insert 10 définit en outre deux pointes 14, qui forment ainsi un V faisant saillie vers la première bague 6, tout en s'évasant à l'opposé du logement 12. De plus, l'insert 10 est solidarisé à ces côtés latéraux par l'intermédiaire de deux ponts de liaison 18.

Au voisinage des pointes 14, une jupe 16, dont la concavité est tournée vers ces pointes, relie les deux côtés latéraux 4₁ et 4₂ du corps 4. Cette jupe 16 est de préférence réalisée dans le même matériau, que celui constitutif de l'ensemble du corps 4. La jupe 16 et le corps 4 ont une rigidité supérieure à celle des ponts 18, lesquels ont pour rôle d'absorber de l'énergie vibratoire liée au fonctionnement normal du second organe mobile. Les ponts 18 sont par exemple réalisés en élastomère.

Dans une zone intermédiaire, située entre la bague 6 et la jupe 16, le corps 4 est ajouré, de manière à définir deux rails latéraux 20, assurant une fonction de guidage comme on le verra dans ce qui suit. Ces rails 20 forment ainsi un chemin s'évasant en direction de l'insert 10. Ces rails 20 sont en outre reliés par différentes nervures 22 recourbées, prévues en l'occurrence au nombre de trois, dont la concavité est tournée en direction de la bague 6.

Le fonctionnement de la biellette de liaison 2, décrite ci-dessus, va maintenant être explicité dans ce qui suit.

En service normal, cette biellette est propre à assurer les fonctions usuelles de traction et de compression, grâce à la présence de l'élastomère, prévu au niveau du logement 8 et pour la fabrication des ponts de liaison 18. Lors d'un choc axial, matérialisé par la flèche F, la biellette est soumise à un effort de compression selon son axe principal. Si cet effort présente une intensité particulièrement élevée, les ponts 18 ont tendance à se déformer, de sorte que l'insert 10 vient en contact avec la jupe 16.

Étant donné la différence de duretés de leurs matériaux constitutifs, ainsi que la minceur de la jupe 16, on conçoit que les pointes 14 de l'insert 10 ont tendance à déchirer cette jupe 16, qui forme ainsi une zone d'amorce de rupture de la biellette. A cet égard on notera que, en service normal, la jupe 16 assure de façon classique une fonction de butée pour une saillie non représentée, s'étendant à partir de l'insert 10. Dans ces conditions, le matériau constitutif de cette jupe 16 doit présenter une rigidité suffisante pour former une telle butée, tout en étant susceptible de se déchirer quand cette jupe est soumise à un effort élevé, notamment lors d'un choc.

Au fur et à mesure que l'insert 10 se rapproche de la première bague 6, il entre en contact avec les différentes nervures 22, les déforme et provoque leurs ruptures successives. Ces nervures assurent ainsi une fonction de dissipation de l'énergie, produite par le choc précité.

Les ponts de liaison 18 assurent ainsi une fonction de dissipation de l'énergie, produite par le choc précité, par déformation et rupture sous l'effet de l'énergie produite par le choc précité. Par ailleurs, lors du rapprochement de l'insert et de la bague 6, les rails latéraux 20 assurent une fonction de guidage de l'insert 10.

On notera que, sur la figure 2, les positions successives de l'insert 10, au fur et à mesure de son déplacement, sont affectées des référence 10₁, 10₂ et 10₃. Au terme du déplacement de l'insert 10, ce dernier se trouve au voisinage de la première bague 6.

La figure 3 illustre l'implantation de la biellette de liaison 2 dans un véhicule automobile, qui est vu de dessous. De façon plus précise, l'arbre non représenté, reçu dans le logement 8, est solidaire du groupe motopropulseur, ou GMP, du véhicule alors que l'arbre reçu dans le logement 12 de l'insert 10 est solidaire de la caisse du véhicule, en l'occurrence du berceau moteur. Le GMP et la caisse, tous deux représentés de façon schématique, sont respectivement affectés des références 100 et 102. On notera que, sur cette figure 3, l'insert 10 est dirigé vers l'arrière du véhicule.

Lors d'un choc sur l'avant du véhicule, il se produit un rapprochement mutuel de la bague 6 et de l'insert 10, comme explicité ci-dessus. Ce mouvement relatif axial a donc pour effet de rompre successivement la jupe 16, puis les différentes nervures 22. On notera cependant que, dans le référentiel du véhicule, l'insert 10 est fixe, puisqu'il est solidaire du berceau moteur, alors que la bague 6 est mobile, puisqu'elle est solidaire du GMP qui se déplace sous l'effet du choc

Dans ces conditions, une fois que la jupe 16 et les nervures 22 ont été brisées, le mouvement du GMP repousse le corps de la biellette de liaison vers l'intérieur du berceau moteur. Par conséquent, le GMP se trouve guidé, jusqu'à venir en appui sur le berceau, de sorte qu'il ne peut plus remonter en direction de l'habitacle.

Ainsi, la biellette de liaison conforme à l'invention permet au GMP d'être guidé dans son plan horizontal par déformation et compression de la biellette, ce qui permet d'éviter sa remontée et/ou son pivotement vers l'habitacle lors d'un choc. La dissipation de l'énergie produite par ce dernier se disperse donc par l'intermédiaire du berceau moteur, qui est l'élément le plus favorable pour remplir cette fonction. On notera donc que la solution proposée par l'invention offre une grande sécurité, dans la mesure où elle permet d'éviter sensiblement tout problème de remontée du GMP, qui serait préjudiciable à l'intégrité physique des passagers.

## Revendications

1. Biellette de liaison entre deux organes mobiles l'un par rapport à l'autre, en particulier entre un groupe motopropulseur (100) et une caisse (102) d'un véhicule automobile, cette biellette comprenant un corps allongé (4), un premier logement (8) de réception d'un premier arbre, destiné à être solidarisé avec l'un desdits deux organes, ainsi qu'un second logement (12) de réception d'un second arbre, destiné à être solidarisé avec l'autre desdits deux organes mobiles, **caractérisée en ce qu'**elle comprend des moyens (16) de rupture programmée, interposés entre lesdits logements (8, 12), ces moyens de rupture programmés étant propres à se rompre lors de l'application d'un effort selon un axe longitudinal (X-X) du corps (4), de manière à autoriser le rapprochement entre les deux logements (8, 12).

2. Biellette selon la revendication 1, **caractérisée en ce que** les moyens de rupture programmée comprennent une jupe mince (16), reliant deux côtés latéraux (4₁, 4₂) du corps (4).

3. Biellette selon la revendication 1 ou 2, **caractérisée en ce que** l'un (12) des deux logements est formé dans un insert (10), réalisé en un matériau plus résistant que les moyens de rupture programmée (16).

4. Biellette selon l'une quelconque des revendications précédentes, **caractérisée en ce que** cette biellette comprend également des moyens (22) de dissipation de l'énergie produite par ledit effort selon l'axe longitudinal du corps.

5. Biellette selon les revendications 3 et 4, **caractérisée en ce que** les moyens de dissipation de l'énergie comprennent au moins une nervure transversale (22), prévue à l'opposé des moyens (16) de rupture programmée par rapport audit insert (10).

6. Biellette selon l'une quelconque des revendications précédentes, **caractérisée en ce qu'**il est prévu des moyens (20) de guidage du mouvement relatif des deux logements.

7. Biellette selon les revendications 3 et 6, **caractérisée en ce que** les moyens de guidage comprennent deux rails latéraux (20) du corps (4), définissant un chemin se rétrécissant à l'opposé de l'insert (10).

8. Véhicule automobile comprenant une caisse (102), un groupe motopropulseur (100), ainsi qu'au moins une biellette de liaison (2), reliant cette caisse et ce groupe motopropulseur, la ou chaque biellette de liaison étant conforme à l'une quelconque des revendications précédentes.

9. Véhicule automobile selon la revendication 8, comprenant au moins une biellette de liaison selon l'une quelconque des revendications 3 à 7, **caractérisé en ce que** l'arbre reçu dans le logement (12) défini dans l'insert (10) en matériau plus résistant est solidaire de la caisse du véhicule, en particulier du berceau moteur.

## Claims

1. Link rod providing the connection between two parts that can move one relative to the other, particularly between a power plant (100) and a bodyshell (102) of a motor vehicle, this link rod comprising an elongate body (4), a first housing (8) to accommodate a first shaft intended to be secured to one of the said two parts, and a second housing (12) to accommodate a second shaft intended to be secured to the other of the said two moving parts, **characterized in that** it comprises scheduled-breakage means (16) interposed between the said housings (8, 12), these scheduled-breakage means being able to break when a force is applied along a longitudinal axis (X-X) of the body (4) so as to allow the two housings (8, 12) to move closer together.

2. Link rod according to Claim 1, **characterized in that** the scheduled-breakage means comprise a thin skirt (16) connected two lateral sides (4₁, 4₂) of the body (4).

3. Link rod according to Claim 1 or 2, **characterized in that** one (12) of the two housings is formed in an insert (10) made of stronger material than the scheduled-breakage means (16).

4. Link rod according to any one of the preceding claims, **characterized in that** this link rod also comprises means (22) of dissipating the energy produced by the said force along the longitudinal axis of the body.

5. Link rod according to Claims 3 and 4, **characterized in that** the means of dissipating energy comprise at least one transverse rib (22) provided on the opposite side of the scheduled-breakage means (16) to the said insert (10).

6. Link rod according to any one of the preceding claims, **characterized in that** it is provided with means (20) for guiding the relative movement of the two housings.

7. Link rod according to Claims 3 and 6, **characterized in that** the guide means comprise two lateral rails (20) of the body (4) defining a path that narrows in the direction away from the insert (10).

8. Motor vehicle comprising the body shell (102), a power plant (100) and at least one link rod (2) connecting this bodyshell and this power plant, the or each link rod being the link rod according to any one of the preceding claims.

9. Motor vehicle according to Claim 8, comprising at least one link rod according to any one of Claims 3 to 7, **characterized in that** the shaft housed in the housing (12) defined in the insert (10) made of a stronger material is secured to the bodyshell of the vehicle, particularly to the engine cradle.

## Patentansprüche

1. Koppelstange zwischen zwei Gliedern, die sich bezüglich einander bewegen können, insbesondere zwischen einem Triebwerk (100) und einer Karosserie (102) eines Kraftfahrzeugs, wobei diese Koppelstange einen länglichen Körper (4), eine erste Aufnahme (8) zum Aufnehmen einer ersten Welle, die fest mit einem der beiden Glieder verbunden werden soll, sowie eine zweite Aufnahme (12) zum Aufnehmen einer zweiten Welle, die fest mit dem anderen der beiden beweglichen Glieder verbunden werden soll, umfasst, **dadurch gekennzeichnet, dass** sie Sollbruchmittel (16) umfasst, die zwischen den Aufnahmen (8, 12) vorgesehen sind, wobei diese Sollbruchmittel bei dem Anlegen einer Kraft entlang einer Längsachse (X-X) des Körpers (4) brechen können, um die Annäherung zwischen den beiden Aufnahmen (8, 12) zu gestatten.

2. Koppelstange nach Anspruch 1, **dadurch gekennzeichnet, dass** die Sollbruchmittel eine dünne Schürze (16) umfassen, die zwei laterale Seiten (4₁, 4₂) des Körpers (4) verbinden.

3. Koppelstange nach Anspruch 1 oder 2, **dadurch gekennzeichnet, dass** eine (12) der beiden Aufnahmen in einem Einsatz (10) ausgebildet ist, der aus einem festeren Material als die Sollbruchmittel (16) hergestellt ist.

4. Koppelstange nach einem der vorhergehenden Ansprüche, **dadurch gekennzeichnet, dass** diese Koppelstange des Weiteren Mittel (22) zum Abführen der Energie aufweist, die durch die Kraft entlang der Längsachse des Körpers erzeugt wird.

5. Koppelstange nach den Ansprüchen 3 und 4, **dadurch gekennzeichnet, dass** die Mittel zum Abführen der Energie mindestens eine Querrippe (22) umfassen, die gegenüber den Sollbruchmitteln (16) bezüglich des Einsatzes (10) vorgesehen sind.

6. Koppelstange nach einem der vorhergehenden Ansprüche, **dadurch gekennzeichnet, dass** Mittel (20) zum Führen der relativen Bewegung der beiden Aufnahmen vorgesehen sind.

7. Koppelstange nach den Ansprüchen 3 und 6, **dadurch gekennzeichnet, dass** die Führungsmittel zwei laterale Schienen (20) des Körpers (4) umfassen, die einen sich vom Einsatz (10) weg verengenden Weg definieren.

8. Kraftfahrzeug, das eine Karosserie (102), ein Triebwerk (100) sowie mindestens eine Koppelstange 82), die diese Karosserie mit diesem Triebwerk verbindet, umfasst, wobei die oder jede Koppelstange einem der vorhergehenden Ansprüche entspricht.

9. Kraftfahrzeug nach Anspruch 8, das mindestens eine Koppelstange nach einem der Ansprüche 3 bis 7 umfasst, **dadurch gekennzeichnet, dass** die in der in dem Einsatz (10) definierten Aufnahme (12) aufgenommene Welle aus einem festeren Material fest mit der Karosserie des Fahrzeugs, insbesondere mit dem Motorträger, verbunden ist.
